# EUROPÄISCHE PATENTSCHRIFT

(11) **EP 0 807 038 B1**
(45) Veröffentlichungstag und Bekanntmachung des Hinweises auf die Patenterteilung: **28.07.1999**
(21) Anmeldenummer: 96903996.5
(22) Anmeldetag: 06.02.1996
(51) Int. Cl.: B60T 8/36, F16K 31/06

(54) **ELEKTROMAGNETVENTIL MIT DRUCKBEGRENZUNGSFUNKTION IN HYDRAULISCHEN KRAFTFAHRZEUGBREMSANLAGEN MIT SCHLUPFREGELUNG UND/ODER AUTOMATISCHEM BREMSENEINGRIFF ZUR FAHRDYNAMIKREGELUNG**
ELECTROMAGNETIC VALVE WITH PRESSURE LIMITING FUNCTION IN MOTOR VEHICLE HYDRAULIC BRAKING SYSTEMS WITH ANTI-SLIP CONTROL AND/OR AUTOMATIC BRAKE ENGAGEMENT FOR CONTROL OF DRIVE DYNAMICS
VANNE ELECTROMAGNETIQUE POURVUE D'UNE FONCTION DE LIMITATION DE PRESSION DANS UN SYSTEME DE FREINAGE HYDRAULIQUE D'AUTOMOBILE A ANTI-PATINAGE ET/OU ENCLENCHEMENT AUTOMATIQUE DES FREINS POUR LA REGULATION DE LA DYNAMIQUE DE ROUTE

(30) Priorität: 09.02.1995 DE 19504246
(43) Veröffentlichungstag der Anmeldung: 19.11.1997
(73) Patentinhaber: Continental Teves AG & Co. oHG, 60488 Frankfurt (DE)
(72) Erfinder: VOLZ, Peter, D-64291 Darmstadt (DE); REINARTZ, Hans-Dieter, D-60439 Frankfurt am Main (DE); DINKEL, Dieter, D-65817 Eppstein (DE)
(86) Internationale Anmeldenummer: EP9600486
(87) Internationale Veröffentlichungsnummer: WO9624514

(56) Entgegenhaltungen:
- EP-A- 0 492 109
- WO-A-92/13741
- DE-A- 2 315 425
- DE-A- 4 141 546
- DE-A- 4 204 417
- DE-A- 4 234 749
- GB-A- 761 703
- US-A- 4 548 233
- US-A- 4 858 956

## Beschreibung

Die Erfindung betrifft ein Elektromagnetventil mit Druckbegrenzungsfunktion in hydraulischen Kraftfahrzeugbremsanlagen mit Schlupfregelung und/oder automatischem Bremseneingriff zur Fahrdynamikregelung, nach den Oberbegriffen der Ansprüche 1 und 8.

Ein Elektromagnetventil mit Druckbegrenzungsfunktion gemäß der gattungsbildenden Art geht bereits aus der DE 42 04 417 A1 hervor. Dieses Elektromagnetventil vereinigt die Funktionen zur Druckmittelsteuerung zwischen dem Bremsdruckgeber und der Radbremse als auch die Begrenzung des Systemdrucks im Sinne eines hydraulisch betätigbaren Druckbegrenzungsventils während einer Antriebsschlupfregelung. Erhöht sich der Systemdruck bzw. der Maximaldruck um den jeweils anstehenden Druck des Bremsdruckgebers, so kann die Druckbegrenzungsfunktion des auf einen bestimmten Schaltpunkt ausgelegten Ventils nicht mehr präzise erfüllt werden. Dieses Problem stellt sich im besonderen Maße bei Verwendung eines derartigen Elektromagnetventils für Bremsanlagen, die einen automatischen Bremseneingriff zur Fahrdynamikregelung ermöglichen sollen.

Aus der EP 0 492 109 A1 ist bereits ein Elektromagnetventil mit Druckbegrenzungsfunktion in einer hydraulischen Bremsanlage für Kraftfahrzeuge bekannt, dessen Ventilstößel im Magnetkern spielbehaftet geführt ist, wodurch nicht auszuschließen ist, daß Druckmittel am Ventilschließglied vorbei in den Ringspalt zwischen Magnetanker und Ventilstößel gelangt. Dies kann das Schaltverhalten des Elektromagnetventils unerwünscht beeinflussen.

Ferner geht aus der DE 42 34 749 A1 ein Elektromagnetventil mit Druckbegrenzung für Kraftfahrzeugbremsanlagen mit Schlupfregelung hervor, dessen im Ventilgehäuse spielbehaftet geführter Ventilstößel in zwei zueinander koaxiale und relativ verschiebbare Stößelelemente unterteilt ist, von denen das eine Stößelelement das Ventilschließglied trägt und das andere Stößelelement vom Elektromagneten antreibbar ist. Eine Druckbegrenzungsfeder stützt sich zwischen den beiden Stößelelementen ab. In Abhängigkeit von den erforderlichen Führungsspielen zwischen den einzelnen Stößelelementen und gegenüber dem Ventilgehäuse ist ein Ringspaltstrom zwischen den Führungsflächen nicht auszuschließen, der sich unerwünscht auf das Schaltverhalten des Elektromagnetventils auswirken kann.

Daher ist es die Aufgabe der Erfindung, die Einflußnahme des am Elektromagnetventil anstehenden Drucks des Bremsdruckgebers auf das Schaltverhalten (Druckbegrenzung) des Elektromagnetventils zu verhindern, weshalb die hydraulische Druckbegrenzungsfunktion ausschließlich vom zulässigen Pumpendruck abhängig sein soll.

Diese Aufgabe wird erfindungsgemäß durch die Merkmale des unabhängigen Patentanspruchs 1 sowie alternativ durch die Merkmale des unabhängigen Patentanspruchs 8 gelöst.

Die Erfindung basiert somit in dem einem Fall auf dem Gedanken, den Druck des Bremsdruckgebers beiderseits des Ventilstößels angreifen zu lassen, so daß unter allen Betriebszuständen der Druck des Bremsdruckgebers ausgeglichen ist, im anderen Falle die Ventilnadel im Magnetkern abzudichten, so daß während der Druckbegrenzungsfunktion die Stirnflächen des Ventilstößels von der Druckwirkung des Bremsdruckgebers frei sind.

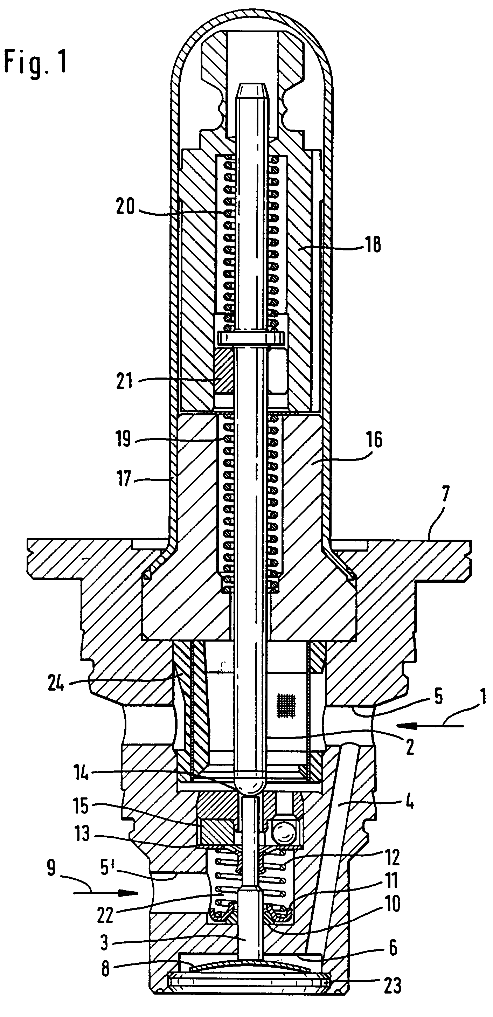

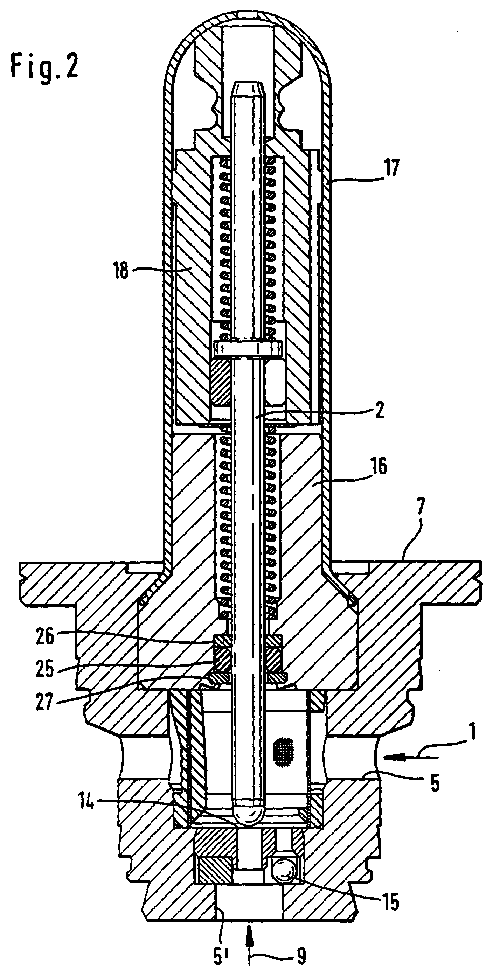

Weitere Merkmale, Vorteile und Anwendungsmöglichkeiten der im Anspruch 1 charakterisierten Erfindung ergeben sich aus der Unteransprüchen sowie aus der nachfolgenden Beschreibung eines Ausführungsbeispiels anhand einer Zeichnung gemäß Figur 1. Der im Patentanspruch 8 dargelegte Lösungsvorschlag wird gleichfalls anhand einer nachfolgenden Beschreibung einer Zeichnung gemäß Figur 2 erläutert.

Die Figur 1 zeigt im Querschnitt ein Elektromagnetventil in der geschlossenen Ventilschaltstellung. Der Magnetkern 16 ist mit der relativ dünnwandig gezogenen Ventilhülse 17 im Ventilgehäuse 7 verstemmt gehalten, die eine in der Abbildung nicht dargestellte Magnetspule aufnimmt. Eine zwischen dem Magnetkern 16 und dem Magnetanker 18 eingespannte Rückstellfeder 19 sorgt für das Anheben des Ventilstößels 2 vom Ventilsitz 14 in der elektromagnetisch nicht erregten Grundstellung. Eine in einer koaxialen Stufenbohrung des Magnetankers 18 angeordnete Druckbegrenzungsfeder 20 hält den Ventilstößel 2 in der Grundstellung des Ventils an einem Anschlag 21 im Magnetanker 18. Zwischen der Stirnfläche des Magnetankers 18 und des Magnetkerns 16 ist eine nicht ferromagnetische Scheibe angeordnet, die das unerwünschte und hinreichend bekannte Festkleben des Magnetankers 18 am Magnetkern 16 während der elektromagnetischen Betätigung verhindert. Das Ventilgehäuse 7 ist in Patronenbauweise angefertigt und besteht aus Automatenstahl, so daß es entsprechend seiner Gehäuseabstufung kraft-und/oder formschlüssig in einem Leichtmetall-Ventilaufnahmekörper gehalten werden kann. Der beiderseits auf Höhe des Ventilstößels 2 in das Ventilgehäuse 7 radial einmündenden erste Druckmittelkanal 5 steht mit dem Bremsdruckgeber 1 in Verbindung, während unterhalb des Ventilsitzes 14 gelegen ein zweiter Druckmittelkanal 5' in das Ventilgehäuse 7 einmündet. Auf Höhe der Einmündungsstelle des zweiten Druckmittelkanals 5' in das Ventilgehäuse 7 befindet sich ein koaxial zum Ventilsitz 14 und zum Ventilstößel 2 ausgerichtetes Betätigungsglied 3, das durch die Wirkung einer Druckfeder 8, entgegen der Schließbewegung des Elektromagnetventils, an der Stirnfläche des Ventilstößels 2 im Bereich des Ventilsitzes 14 anliegt. Ein die Druckfeder 8 aufnehmender Druckraum 6 befindet sich unterhalb des zweiten Druckmittelkanals 5' im Ventilgehäuse 7. Dieser Druckraum 6 steht mittels einer Druckmittelabzweigung 4 am ersten Druckmittelkanal 5 jeweils unter der Druckwirkung des Bremsdruckgebers 1. Die Abdichtung des Druckraums 6 gegenüber dem den zweiten Druckmittelkanal 5' aufweisenden Pumpendruckraum 22 erfolgt mittels einer Ringdichtung 10 am stößelförmigen Schaft des Betätigungsgliedes 3, die mittels einer Stützscheibe 11 im Pumpendruckraum 22 fixiert ist. Die nötige Anpreßkraft erzeugt eine Feder 12, die sich mit ihrem der Stützscheibe 11 abgewandten Windungsende an einer Zentrierscheibe 13 abstützt, die zur Führung des Betätigungsgliedes 3 beiträgt und Durchbrüche aufweist, die eine Verbindung des zweiten Druckmittelkanals 5' mit dem ersten Druckmittelkanal 5 im Ventilgehäuse 7 ermöglichen. Zwischen dem Ventilsitz 14 und der Stützscheibe 11 befindet sich ein Rückschlagventil 15, das bei Bedarf eine Druckmittelverbindung vom Bremsdruckgeber 1 zum zweiten Druckmittelkanal 5' sicherstellt, an den sich auch die zur Radbremse führende Hauptdruckleitung anschließt. Sowohl die Druckfeder 8, das Betätigungsglied 3, die Ringdichtung 10, die Stützscheibe 11, die Feder 12, das Rückschlagventil 15, der Ventilsitz 14 sowie der Ventilstößel 2 befinden sich in koaxialer Anordnung zueinander. Dadurch, daß die Druckfeder 8 als Tellerfeder ausgeführt ist, ergibt sich ein besonders kleinbauender Druckraum 6, der die damit bisher aus der DE 4204 417 A1 bekannte Konstruktion ausschließlich in der Baulänge nur geringfügig vergrößert. Infolge der Patronenbauweise ist zum Verschließen des Druckraums 6 in das Ventilgehäuse 7 ein Deckel 23 dicht verstemmt befestigt. Zur Reinhaltung des Ventilsitzes 14 sind vorzugsweise im Bereich beider Druckmittelkanäle 5,5' Ringfilterelemente vorgesehen, wozu abbildungsgemäß das Ringfilterelement 24 des ersten Druckmittelkanals 5 innerhalb des zwischen dem Magnetkern 16 und dem Ventilsitz 14 sich erstreckenden Hohlraums platzsparend gehalten ist.

Nachfolgend wird die Funktionsweise des vorgeschlagenen Elektromagnetventils beschrieben. Durch die elektromagnetische Erregung des Magnetankers 18 gelangt der Ventilstößel 2 entgegen der relativ schwachen Wirkung der Rückstellfeder 19 im Magnetkern 16 zur Anlage am Ventilsitz 14. Dabei hebt sich die Ventilstößel 2 vorzugsweise um ein geringes Hubmaß vom Anschlag 21 im Magnetanker 18 ab, so daß auch bei Verschleißerscheinungen zwischen Ventilstößel 2 und Ventilsitz 14 jederzeit bei elektromagnetischer Betätigung des Ventils ein sicheres Schließen der Druckmittelverbindung zwischen dem ersten und dem zweiten Druckmittelkanal 5,5' gewährleistet ist. Befindet sich das Elektromagnetventil in seiner Sperrstellung, so gelangt der Ventilstößel 2 in Kontakt mit dem federbelasteten Betätigungsglied 3. Zwischen dem Durchlaß im Ventilsitz 14 und dem Schaft des Betätigungsgliedes 3 verbleibt ein Ringspalt, in den sich der vom zweiten Druckmittelkanal 5' kommende Pumpendruck fortpflanzt und in der Schließstellung des Ventilstößels 2 dessen Ringstirnfläche beaufschlagt. Mit einer Veränderung des Drucks im Bremsdruckgeber 1 stellt sich sowohl unterhalb des Betätigungsgliedes 3 als auch oberhalb des Ventilstößels 2 ein vom Betrag her gleicher Hydraulikdruck ein, der infolge seiner entgegengesetzten Wirkung an entsprechenden Stirnflächen des Betätigungsgliedes 3 und des Ventilstößels 2 zu einem Druckausgleich des vom Bremsdruckgeber 1 ausgeübten Betätigungsdrucks führt. Hierdurch ergibt sich, daß die zwischen dem Ventilstößel 2 und dem Magnetanker 18 angeordnete Druckbegrenzungsfeder 20 ausschließlich auf den zulässigen Pumpendruck ausgelegt werden muß. Hingegen richtet sich die Druckkraft der am Betätigungsglied 3 angeordneten Druckfeder 8 ausschließlich auf die Kompensation der Kraft, die durch den Pumpendruck auf das Betätigungsglied 3 ausgeübt wird, weshalb die Druckkraft der Druckfeder 8 dem von der Pumpe 9 erzeugten Druckkraft entspricht.

Eine alternative Ausführungsform geht aus Figur 2 hervor. Abweichend von Figur 1 weist die Darstellung nach Figur 2 einen im Magnetkern 16 abgedichteten Ventilstößel 2 auf, so daß in der elektromagnetisch betätigten Schließstellung des Ventilstößels 2 der vom Bremsdruckgeber 1 in den ersten Druckmittelkanal 5 eingesteuerten Druck sich nicht bis in den Raum der Ventilhülse 17 ausbreiten kann, womit keine der Druckbegrenzungsfunktion beeinträchtigende Einflußnahme durch Druckänderungen vom Bremsdruckgeber 1 wirksam werden kann. Befindet sich das Elektromagnetventil in seiner Sperrstellung, so gelangt bis zum Erreichen der hydraulischen Öffnungsfunktion des Ventilstößels 2 der im zweiten Druckmittelkanal 5' anstehende Pumpendruck nicht in Richtung des ersten Druckmittelkanals 5 und damit nicht zum Bremsdruckgeber 1. Erst mit Überschreiten der zwischen dem Ventilstößel 2 und dem Magnetanker 18 wirksamen Vorspannkraft der Druckbegrenzungsfeder beginnt der Ventilstößel 2 sich vom Ventilsitz 14 in Öffnungsrichtung zu bewegen. Alle übrigen, in Figur 1 unterhalb des Rückschlagventils 15 dargestellten Einzelheiten entfallen somit bei der in Figur 2 vorgeschlagenen Ausführungsvariante. Die Abdichtung des Ventilstößels 2 im Magnetkern 16 erfolgt mittels einer Elastomerdichtung 25, die als Ringdichtung zwischen einem Stützring 26 und Verstemmscheibe 27 eingespannt ist. Es zeigt die Ventilhülse 17 in ihrem Dombereich eine Atmosphärenöffnung. Diese kann jedoch im Hinblick auf die geringen Kompressionsänderungen zugunsten eines korrosionsgeschützten Magnetankerraums entfallen. Soweit in Figur 2 nicht auf alle Einzelheiten eingegangen wurde, gehen diese aus Figur 1 hervor.

### Bezugszeichenliste

- 1: Bremsdruckgeber
- 2: Ventilstößel
- 3: Betätigungsglied
- 4: Druckmittelabzweigung
- 5,5': Druckmittelkanal
- 6: Druckraum
- 7: Ventilgehäuse
- 8: Druckfeder
- 9: Pumpe
- 10: Ringdichtung
- 11: Stützscheibe
- 12: Feder
- 13: Zentrierscheibe
- 14: Ventilsitz
- 15: Rückschlagventil
- 16: Magnetkern
- 17: Ventilhülse
- 18: Magnetanker
- 19: Rückstellfeder
- 21: Anschlag
- 22: Pumpendruckraum
- 23: Deckel
- 24: Ringfilterelement
- 25: Elastomerdichtung
- 26: Stützring
- 27: Verstemmscheibe

## Patentansprüche

1. Elektromagnetventil mit Druckbegrenzungsfunktion in hydraulischen Kraftfahrzeugbremsanlagen mit Schlupfregelung und/oder automatischen Bremseneingriff zur Fahrdynamikregelung, das einen von einer Ventilhülse **(17)** umschlossenen Magnetanker (18) aufweist, der in Abhängigkeit einer strombeaufschlagbaren, an der Ventilhülse angebrachten Magnetspule eine Hubbewegung vollzieht, so daß ein im Magnetanker (18) angeordneter und von einem Magnetkern (16) teilumschlossener Ventilstößel (2) mit einem in einem Ventilgehäuse (7) befestigten Ventilsitz (14) zusammenwirken kann, wobei die in Abhängigkeit von der elektromagnetischen Stellkraft vollziehbare Hubbewegung des spielbehaftet im Magnetkern (16) geführten Ventilstößels (2) durch Einwirkung einer hydraulischen Stellkraft veränderbar ist, mit einem im Bereich des Ventilstößels (2) in das Ventilgehäuse (7) einmündenden ersten Druckmittelkanal (5), der eine Verbindung zu einem Bremsdruckgeber (1) herstellt, sowie mit einem abgewandt vom Ventilsitz (14) und dem Ventilstößel (2) in das Ventilgehäuse (7) einmündenden zweiten Druckmittelkanal (5'), der mit einer Pumpe (9) und wenigstens einer Radbremse in Verbindung steht und der in Abhängigkeit von der Stößelstellung mit dem ersten Druckmittelkanal (5) verbindbar ist, **dadurch gekennzeichnet**, daß der hydraulische Druck des Bremsdruckgebers (1) über eine Druckmittelabzweigung (4) am ersten Druckmittelkanal (5) in einen Druckraum (6) des Ventilgehäuses (7) einmündet, in den sich **ein der Schließbewegung des Ventilstößels (2) entgegenwirkendes** Betätigungsglied (3) erstreckt**, daß das Betätigungsglied (3) durch den Ventilsitz (14) ragend am Ventilstößel (2) anliegt**, daß der hydraulische Druck des Bremsdruckgebers (1) **sowohl unterhalb des Betätigungsgliedes (3) als auch oberhalb des Ventilstößels (2) vom Betrag her gleich , und daß das Betätigungsglied (3)** von einer in Richtung des Ventilstößels (2) wirkende Druckfeder (8) im Druckraum (6) beaufschlagt ist, wobei die Vorspannkraft der Druckfeder (8) am Betätigungsglied (3) der von der Pumpe (9) am Betätigungsglied (3) erzeugten und in Richtung der Druckfeder (8) wirksamen Druckkraft entspricht, wozu das Betätigungsglied (3) an seinem Schaft in Richtung des Druckraums (6) im Ventilgehäuse (7) abgedichtet ist.

2. Elektromagnetventil nach Anspruch 1, **dadurch gekennzeichnet**, daß das Betätigungsglied (3) koaxial zum Ventilstößel (2) angeordnet ist.

3. Elektromagnetventil nach Anspruch 1 oder 2, **dadurch gekennzeichnet**, daß das Betätigungsglied (3) an seinem Schaft eine Ringdichtung (10) aufweist, die einen Kurzschlußstrom zwischen dem im Druckraum (6) anstehenden Fluid des Bremsdruckgebers (1) und dem Fluid der Pumpe (9) verhindert.

4. Elektromagnetventil nach Anspruch 3, **dadurch gekennzeichnet**, daß die Ringdichtung (10) im Bereich des Ventilgehäuses (7) angeordnet ist, welche vom Druck der Pumpe (9) beaufschlagt ist.

5. Elektromagnetventil nach Anspruch 3, **dadurch gekennzeichnet**, daß die Ringdichtung (10) durch eine Stützscheibe (11) im Ventilgehäuse (7) fixiert ist, an der sich eine Feder (12) abstützt.

6. Elektromagnetventil nach einem Anspruch 1, **dadurch gekennzeichnet**, daß ein dem Druckraum (6) entfernt gelegenes Schaftende des Betätigungsgliedes (3) in einer Zentrierscheibe (13) geführt ist, wobei zwischen der Zentrierscheibe (13) und einer Stützscheibe (11) die Feder (12) gehalten ist.

7. Elektromagnetventil nach Anspruch 6, **dadurch gekennzeichnet**, daß zwischen der Zentrierscheibe (13) und dem Ventilsitz (14) ein Rückschlagventil (15) gehalten ist.

8. Elektromagnetventil mit Druckbegrenzungsfunktion in hydraulischen Kraftfahrzeugbremsanlagen mit Schlupfregelung und/oder automatischen Bremseneingriff zur Fahrdynamikregelung, das einen von einer Ventilhülse **(17)** umschlossenen Magnetanker (18) aufweist, der in Abhängigkeit einer strombeaufschlagbaren, an der Ventilhülse angebrachten Magnetspule eine Hubbewegung vollzieht, so daß ein im Magnetanker (18) angeordneter und von einem Magnetkern (16) teilumschlossener Ventilstößel (2) mit einem in einem Ventilgehäuse (7) befestigten Ventilsitz (14) zusammenwirken kann, wobei die in Abhängigkeit von der elektromagnetischen Stellkraft vollziehbare Hubbewegung des spielbehaftet im Magnetkern (16) geführten Ventilstößels (2) durch Einwirkung einer hydraulischen Stellkraft veränderbar ist, mit einem im Bereich des Ventilstößels (2) in das Ventilgehäuse (7) einmündenden ersten Druckmittelkanal (5), der eine Verbindung zu einem Bremsdruckgeber (1) herstellt, sowie mit einem abgewandt vom Ventilsitz (14) und dem Ventilstößel (2) in das Ventilgehäuse (7) einmündenden zweiten Druckmittelkanal (5'), der mit einer Pumpe (9) und wenigstens einer Radbremse in Verbindung steht und der in Abhängigkeit von der Stößelstellung mit dem ersten Druckmittelkanal (5) verbindbar ist, **dadurch gekennzeichnet**, daß der Ventilstößel (2) im Magnetkern (16) durch eine Elastomerdichtung (25) abgedichtet ist, und daß die Elastomerdichtung (25) zwischen einem Stützring (26) und einer Verstemmscheibe (27) im Magnetkern (16) eingespannt ist.

## Claims

1. Solenoid valve with a pressure-limiting function, in particular in hydraulic automotive vehicle brake systems with slip control and/or automatic brake management for driving dynamics control, which includes a magnetic armature (18), enclosed by a valve sleeve (17), that performs a stroke movement in dependence on an energizable magnetic coil fitted to the valve sleeve, so that a valve tappet (2), which is arranged in the magnetic armature (18) and is partially enclosed by a magnetic core (16), can cooperate with a valve seat (14) mounted in a valve housing (7), and the stroke movement of the valve tappet (2) guided with a clearance in the magnetic core (16), which movement can be performed as a function of the electromagnetic control force, is variable by the action of a hydraulic control force, including a first pressure fluid channel (5) which opens into the valve housing (7) proximate the valve tappet (2) and establishes a connection to a braking pressure generator (1), and a second pressure fluid channel (5') which opens into the valve housing (7) remote from the valve seat (14) and the valve tappet (2), the second pressure fluid channel being connected to a pump (9) and at least one wheel brake and being connectable to the first pressure fluid channel (5) in dependence on the position of the tappet,
**characterized** in that the hydraulic pressure of the braking pressure generator (1), by way of a pressure fluid branch line (4) at the first pressure fluid channel (5), opens into a pressure chamber (6) of the valve housing (7) into which an actuating member (3) extends which counteracts the closing movement of the valve tappet (2), in that the actuating member (3) projects through the valve seat (14) and abuts on the valve tappet (2), in that the hydraulic pressure of the braking pressure generator (1) has equal amounts both downstream of the actuating member (3) and upstream of the valve tappet (2), and in that the actuating member (3) is acted upon by a compression spring (8) in the pressure chamber (6) which acts in the direction of the valve tappet (2), with the preloading force of the compression spring (8) at the actuating member (3) corresponding to the pressure force which is generated by the pump (9) at the actuating member (3) and is effective in the direction of the compression spring (8), to which end the actuating member (3) is sealed at its stem in the direction of the pressure chamber (6) in the valve housing (7).

2. Solenoid valve as claimed in claim 1,
**characterized** in that the actuating member (3) is arranged coaxially relative to the valve tappet (2).

3. Solenoid valve as claimed in claim 1 or claim 2,
**characterized** in that the actuating member (3) includes at its stem an annular seal (10) which prevents a bypass flow between the fluid of the braking pressure generator (1), that prevails in the pressure chamber (6), and the fluid of the pump (9).

4. Solenoid valve as claimed in claim 3,
**characterized** in that the annular seal (10) is arranged proximate the valve housing (7) and is acted upon by the pressure of the pump (9).

5. Solenoid valve as claimed in claim 3,
**characterized** in that the annular seal (10) is fixed in position in the valve housing (7) by a supporting disc (11) on which a spring (12) is supported.

6. Solenoid valve as claimed in claim 1,
**characterized** in that a stem end of the actuating member (3), which is remote from the pressure chamber (6), is guided in a centering disc (13), and the spring (12) is retained between the centering disc (13) and the supporting disc (11).

7. Solenoid valve as claimed in claim 6,
**characterized** in that a non-return valve (15) is retained between the centering disc (13) and the valve seat (14).

8. Solenoid valve with a pressure-limiting function, in particular in hydraulic automotive vehicle brake systems with slip control and/or automatic brake management for driving dynamics control, which includes a magnetic armature (18), enclosed by a valve sleeve (17), that performs a stroke movement in dependence on an energizable magnetic coil fitted to the valve sleeve, so that a valve tappet (2), which is arranged in the magnetic armature (18) and is partially enclosed by a magnetic core (16), can cooperate with a valve seat (14) mounted in a valve housing (7), and the stroke movement of the valve tappet (2) guided with a clearance in the magnetic core (16), which can be performed as a function of the electromagnetic control force, is variable by the action of a hydraulic control force, including a first pressure fluid channel (5) which opens into the valve housing (7) proximate the valve tappet (2) and establishes a connection to a braking pressure generator (1), and a second pressure fluid channel (5') which opens into the valve housing (7) remote from the valve seat (14) and the valve tappet (2), the second pressure fluid channel being connected to a pump (9) and at least one wheel brake and being connectable to the first pressure fluid channel (5) in dependence on the position of the tappet,
**characterized** in that the valve tappet (2) in the magnetic core (16) is sealed by an elastomeric seal (25), and in that the elastomeric seal (25) is compressed between a prop ring (26) and a calked washer (27) in the magnetic core (16).

## Revendications

1. Soupape électromagnétique à fonction de limitation de pression dans des systèmes de freinage hydraulique de véhicules automobiles à régulation antipatinage et/ou intervention automatique des freins pour la régulation de la dynamique du mouvement du véhicule, qui comporte un induit (18) entouré par un manchon de soupape (17) et accomplissant une course de déplacement en fonction d'une bobine électromagnétique pouvant être alimentée en courant et montée sur le manchon de soupape, de sorte qu'un poussoir de soupape (2), disposé dans l'induit (18) et partiellement entouré par un noyau magnétique (16), peut coopérer avec un siège de soupape (14) fixé dans un boîtier de soupape (7), la course de déplacement, que peut accomplir en fonction de la force de commande électromagnétique le poussoir de soupape (2) guidé avec jeu dans le noyau magnétique (16), pouvant être modifiée par l'action d'une force de commande hydraulique, avec un premier canal (5) de fluide hydraulique, débouchant dans la région du poussoir de soupape (2) dans le boîtier de soupape (7), canal qui réalise une liaison vers un transmetteur de pression de freinage (1), et avec un deuxième canal (5') de fluide hydraulique, débouchant dans le boîtier de soupape (7) à l'opposé du siège de soupape (14) et du poussoir de soupape (2), canal qui communique avec une pompe (9) et au moins un frein de roue et qui peut être relié au premier canal (5) en fonction de la position du poussoir, **caractérisée** en ce que la pression hydraulique du transmetteur de pression de freinage (1) débouche, par l'intermédiaire d'une dérivation (4) de fluide hydraulique sur le premier canal (5), dans une chambre de pression (6) du boîtier de soupape (7) dans laquelle s'étend un actionneur (3) s'opposant au mouvement de fermeture du poussoir de soupape (2), en ce que l'actionneur (3) s'applique contre le poussoir de soupape (2) en se dressant dans le siège de soupape (14), en ce que la pression hydraulique du transmetteur de pression de freinage (1) est d'un montant identique tant en dessous de l'actionneur (3) qu'au-dessus du poussoir de soupape (2), et en ce que l'actionneur (3) est sollicité dans la chambre de pression (6) par un ressort de compression (8) agissant en direction du poussoir de soupape (2), la force de précontrainte du ressort de compression (8) sur l'actionneur (3) correspondant à la force de pression produite par la pompe (9) sur l'actionneur (3) et active en direction du ressort de compression (8),la tige de l'actionneur (3) étant à cet effet isolée en direction de la chambre de pression (6) dans le boîtier de soupape (7).

2. Soupape électromagnétique selon la revendication 1, **caractérisée** en ce que l'actionneur (3) est disposé coaxialement au poussoir de soupape (2).

3. Soupape électromagnétique selon la revendication 1 ou 2, **caractérisée** en ce que l'actionneur (3) possède sur sa tige un joint d'étanchéité annulaire (10), qui empêche un courant de court-circuit entre le fluide de la pompe (9) et le fluide du transmetteur de pression de freinage (1) qui est présent dans la chambre de pression (6).

4. Soupape électromagnétique selon la revendication 3, **caractérisée** en ce que le joint d'étanchéité annulaire (10) est disposé dans la région du boîtier de soupape (7) qui est sollicitée par la pression de la pompe (9).

5. Soupape électromagnétique selon la revendication 3, **caractérisée** en ce que le joint d'étanchéité annulaire (10) est fixé dans le boîtier de soupape (7) par une rondelle de soutien (11), contre laquelle s'appuie un ressort (12).

6. Soupape électromagnétique selon la revendication 1, **caractérisée** en ce qu'une extrémité de tige, éloignée de la chambre de pression (6), de l'actionneur (3) est guidée dans une rondelle de centrage (13), le ressort (12) étant maintenu entre la rondelle de centrage (13) et une rondelle de soutien (11).

7. Soupape électromagnétique selon la revendication 6, **caractérisée** en ce qu'un clapet antiretour (15) est maintenu entre la rondelle de centrage (13) et le siège de soupape (14).

8. Soupape électromagnétique à fonction de limitation de pression dans des systèmes de freinage hydraulique de véhicules automobiles à régulation antipatinage et/ou intervention automatique des freins pour la régulation de la dynamique du mouvement du véhicule, qui comporte un induit (18) entouré par un manchon de soupape (17) et accomplissant une course de déplacement en fonction d'une bobine électromagnétique pouvant être alimentée en courant et montée sur le manchon de soupape, de sorte qu'un poussoir de soupape (2), disposé dans l'induit (18) et partiellement entouré par un noyau magnétique (16), peut coopérer avec un siège de soupape (14) fixé dans un boîtier de soupape (7), la course de déplacement, que peut accomplir en fonction de la force de commande électromagnétique le poussoir de soupape (2) guidé avec jeu dans le noyau magnétique (16), pouvant être modifiée par l'action d'une force de commande hydraulique, avec un premier canal (5) de fluide hydraulique, débouchant dans la région du poussoir de soupape (2) dans le boîtier de soupape (7), canal qui réalise une liaison vers un transmetteur de pression de freinage (1), et avec un deuxième canal (5') de fluide hydraulique, débouchant dans le boîtier de soupape (7) à l'opposé du siège de soupape (14) et du poussoir de soupape (2), canal qui communique avec une pompe (9) et au moins un frein de roue et qui peut être relié au premier canal (5) en fonction de la position du poussoir, **caractérisée** en ce que le poussoir de soupape (2) est isolé dans le noyau magnétique (16) par un joint d'étanchéité élastomère (25), et en ce que le joint d'étanchéité élastomère (25) est serré dans le noyau magnétique (16) entre une bague de soutien (26) et une rondelle matée (27).
